(19) **Europäisches Patentamt / European Patent Office / Office européen des brevets**

(11) **EP 1 967 060 A1**

(12) **EUROPÄISCHE PATENTANMELDUNG**

(43) Veröffentlichungstag:
**10.09.2008 Patentblatt 2008/37**

(51) Int Cl.:
*A01D 78/10* (2006.01)  *A01D 80/02* (2006.01)

(21) Anmeldenummer: **07119168.8**

(22) Anmeldetag: **24.10.2007**

(84) Benannte Vertragsstaaten:
**AT BE BG CH CY CZ DE DK EE ES FI FR GB GR HU IE IS IT LI LT LU LV MC MT NL PL PT RO SE SI SK TR**
Benannte Erstreckungsstaaten:
**AL BA HR MK RS**

(30) Priorität: **05.03.2007 DE 102007010522**

(71) Anmelder: **LTH Landtechnik Hohenmölsen GmbH 06679 Hohenmölsen (DE)**

(72) Erfinder:
• **Daferner, Gerhard 86554 Pöttmes (DE)**

• **Frinzl, Richard 86529 Schrobenhausen (DE)**
• **Werthmöller, Gregor 48477 Hörstel (DE)**
• **Roelofs, J. E. A. 7234 SB Wichmon (NL)**

(74) Vertreter: **Charrier, Rapp & Liebau Patentanwälte Postfach 31 02 60 86063 Augsburg (DE)**

(54) **Heuwerbungsmaschine**

(57) Eine Heuwerbungsmaschine, insbesondere ein Kreiselzettwender (1), weist mindestens einen Arbeitskreisel auf, der in seiner Arbeitsstellung um eine überwiegend vertikale und gegenüber der Vertikalrichtung um einen vorbestimmten Winkel geneigte Achse (11) drehbar ist. Der Arbeitskreisel ist entlang seines Umfangs mit einer Vielzahl von Zinken (20) bestückt, deren Schenkel (26, 27) jeweils einen Hauptabschnitt (27) aufweisen, der in der Arbeitsstellung der Maschine dergestalt schräg zum Boden (23) gerichtet ist, dass er sich zugleich annähernd radial auswärts bezüglich der Kreiseldrehachse (11) erstreckt. Ein unterer Endabschnitt (26) des Schenkels (26, 27) ist gegenüber dem Hauptabschnitt (27) dergestalt hakenförmig abgewinkelt, dass er in der Arbeitsstellung sowohl bezüglich der Tangentialrichtung (T) der Kreiseldrehung nach vorne oder zumindest schräg nach vorne gerichtet ist, als auch radial auswärts bezüglich der Kreiseldrehachse (11) unter einem kleineren Winkel zum Boden (23) als der Hauptabschnitt (27) verläuft. Die Zinken können auch als Doppelzinken (120) mit zwei Schenkeln (126K, 127K; 126L, 126L) unterschiedlicher Länge ausgebildet sein.

Fig. 5

**Beschreibung**

Die Erfindung betrifft eine Heuwerbungsmaschine entsprechend dem Oberbegriff des Anspruchs 1 sowie einen Zinken für eine solche Heuwerbungsmaschine.

Eine Heuwerbungsmaschine dieser Art, auch Kreiselzettwender oder Kreiselheuer genannt, ist beispielsweise in der DE 198 59 922 A1 gezeigt. Solche Maschinen haben den Zweck, am Boden liegendes Grünfutter wie Gras, Klee und dergleichen aus der Mahd oder aus der Fläche heraus möglichst gleichmäßig für eine Trocknung durch Sonneneinstrahlung zu verteilen, sowie im weiteren Verlauf das angewelkte Grünfutter zu wenden und zu mischen, damit auch das zunächst dem Boden zugewandte feuchtere Futter möglichst der direkten Sonnenwärme ausgesetzt wird. Der fortschrittliche Landwirt möchte nach nur einem Sonnentag das Grünfutter als Anwelksilage einfahren. Der hier interessierende Bearbeitungsprozess dient somit der Verkürzung der Anwelk- bzw. Trocknungszeit.

In Fachkreisen ist bekannt, dass bei Kreiselzettwendem der Kreiseldurchmesser einen bedeutenden Einfluss auf die Streuqualität hat. Das bedeutet, dass ein großer Kreiseldurchmesser mindere Streuqualität und ein kleiner Kreiseldurchmesser wesentlich bessere Streuqualität liefert. Man nimmt die großen Kreiseldurchmesser jedoch in Kauf, da man bei gleicher Arbeitsbreite mit weniger Kreiselpaaren auskommt, was die Geräte preiswerter macht.

Aufgabe der Erfindung ist es, eine Heuwerbungsmaschine, nämlich einen Kreiselzettwender, mit verbesserten Streueigenschaften, insbesondere mit einer verbesserten Streuleistung bei großem Kreiseldurchmesser, zu schaffen und einen zur Verwendung an einer solchen verbesserten Maschine geeigneten Zinken bereitzustellen.

Diese Aufgabe wird erfindungsgemäß durch eine Heuwerbungsmaschine mit den Merkmalen des Anspruchs 1 bzw. durch einen Zinken mit den Merkmalen des Anspruchs 11 gelöst. Vorteilhafte Ausgestaltungen der Erfindung sind in den jeweiligen Unteransprüchen angegeben.

Herkömmliche Zinken eines Kreiselzettwenders umfahren oder überfahren Widerstände in Gestalt größerer Futtermassen sowie wiederkehrender Futteranhäufungen und führen somit in diesen Fällen zu einem verbesserungswürdigen Streubild. In diesem Fall können die Sonnenstrahlen nur eine zu geringe Grünfuttermasse erreichen. Dies führt zu längeren Trocknungszeiten, was das Einbringen des Anwelkfutters mit einem vorgeschriebenen Trockensubstanzgehalt innerhalb eines Sonnentages verhindert. Demgegenüber wird durch die erfindungsgemäße Gestaltung der Zinken mit einem in eine bestimmte Richtung hakenförmig abgewinkelten Endabschnitt eine Optimierung der Streueigenschaften erreicht. Das hat zur Folge, dass das gemähte, am Boden liegende und zur Bearbeitung anstehende Grünfutter, welches aus teilweise untereinander verkettetem und verklebtem Blattwerk und Stengeln besteht, besser entzerrt und gewendet sowie gleichmäßiger und in kleineren Portionen über die Trocknungsfläche verteilt wird.

Die Wirkung der vorliegenden Erfindung ist unabhängig davon, ob viel oder wenig Grünfutter je Flächeneinheit gestreut werden muss, ob das Futter ineinander verzerrt ist, oder ob Anhäufungen vorhanden sind. Versuche anhand aller üblichen Futterarten, -längen und - mengen haben dieses Phänomen bestätigt. Bei gleicher Arbeitsgeschwindigkeit geschieht eine wesentlich bessere, gleichmäßigere und stärker durchmischende sowie wendende Ablage des Grünfutters auf der Trocknungsfläche. Dies gilt sowohl für soeben gemähtes Grünfutter, als auch für Futter mit einem bereits erfolgten Trocknungsfortschritt. Insbesondere die oberen, bereits angetrockneten Decklagen werden bei Anwendung der Erfindung wesentlich heftiger durchmischt. All diese Vorteile führen schließlich zu einer erheblichen Verkürzung der Trocknungszeit.

Durch die erfindungsgemäßen hakenförmigen Zinken kann ferner die Umfangsgeschwindigkeit der nahe dem Boden wirkenden Zinkenenden erheblich reduziert werden. Dieses Phänomen bewirkt eine bessere Wirtschaftlichkeit und eine geringere Futterverschmutzung. Der Unterschied der Streuqualität zwischen großem und kleinem Kreiseldurchmesser ist bei den erfindungsgemäßen hakenförmigen Zinken nicht mehr gegeben. Die Maschine arbeitet bei großem und kleinem Kreiseldurchmesser gleichermaßen optimal.

Besonders vorteilhaft ist eine Kombination der Hakenform der Zinken mit einer Ausbildung als Doppelzinken, bei denen die beiden Schenkel unterschiedliche Längen aufweisen und in ihrer Bewegungsrichtung so voneinander beabstandet sind, dass der kürzere Schenkel dem längeren in der Arbeitsbewegung vorauseilt. Hierdurch wird eine zweistufige Erfassung des Futters durch die beiden Schenkel bewirkt, die zu einer besonders gleichmäßigen Verteilung des Futters beim Abwurf führt.

Merkmale und Vorteile der Erfindung sind aus der nachfolgenden Beschreibung und den Zeichnungen, in welchen ein Ausführungsbeispiel der Erfindung dargestellt ist, ersichtlich. Es zeigt:

Fig.1 einen an einen Traktor angehängten erfindungsgemäßen Kreiselheuer in Seitenansicht,

Fig. 2 einen erfindungsgemäßen Kreiselheuer mit vier Kreiseln in Draufsicht,

Fig. 3 einen erfindungsgemäßen linksdrehenden Kreisel in Seitenansicht und Draufsicht,

Fig. 4 einen herkömmlichen rechtsdrehenden Kreisel in Seitenansicht und Draufsicht,

Fig. 5     die Anordnung eines erfindungsgemäßen Zinkens an einem Zinkenträger eines Kreiselheuers in Seitenansicht und Draufsicht,

Fig. 6     eine Variante eines erfindungsgemäßen Zinkens in Seitenansicht,

Fig. 7     eine weitere Variante eines erfindungsgemäßen Zinkens in Seitenansicht,

Fig. 8     eine zweite Ausführungsform eines erfindungsgemäßen Kreisels in Seitenansicht und Draufsicht,

Fig. 9     eine andere Seitenansicht der zweiten Ausführungsform von Fig. 8 und

Fig. 10    zwei weitere Varianten eines erfindungsgemäßen Zinkens in Seitenansicht.

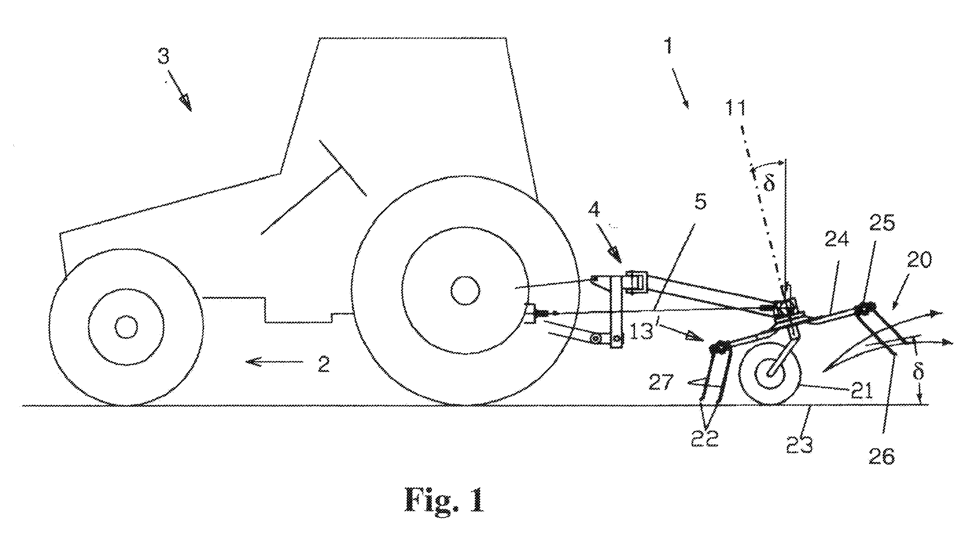

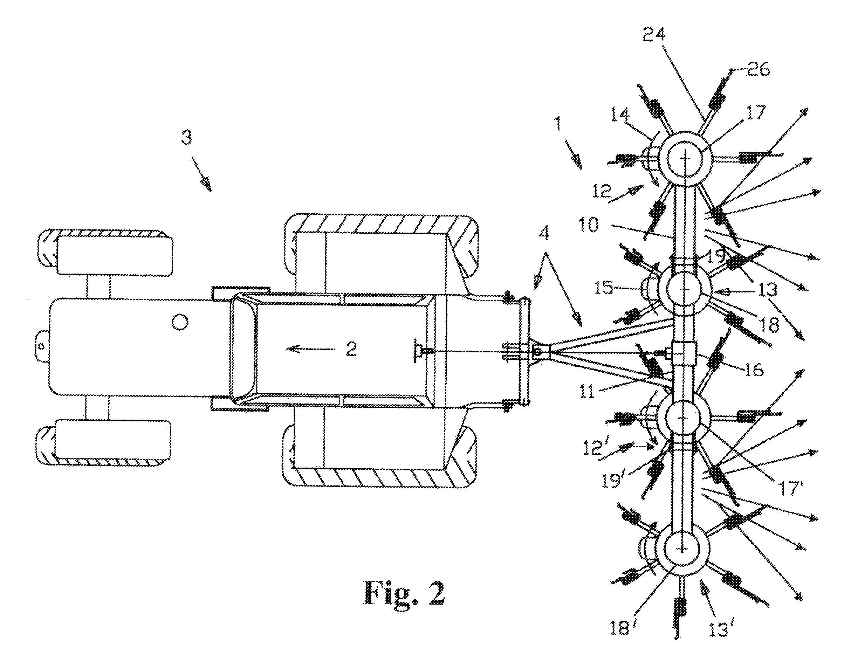

Fig. 1 und Fig. 2 zeigen den grundsätzlichen Aufbau eines erfindungsgemäßen Kreiselheuers 1, der in Fahrtrichtung 2 hinten an das Dreipunktgestänge eines Traktors 3 mittels einer Tragkonstruktion 4 angebaut ist. Kreiselheuer mit einem derartigen grundsätzlichen Aufbau sind bekannt, sowohl als angebaute, als auch als angehängte Geräte. Der Kreiselheuer 1 wird ausgehend von der Zapfwelle des Traktors 3 über eine Gelenkwelle 5 angetrieben.

In einem Maschinenrahmen 10 (Fig. 2) sind um überwiegend vertikal ausgerichtete, jedoch gegenüber der Vertikalen um einen kleinen Winkel $\delta$ (Fig. 1) geneigte Kreiselachsen 11 beispielsweise vier Arbeitskreisel 12, 12', 13 und 13' dreh- und antreibbar gelagert, wobei benachbarte Arbeitskreisel, im gezeigten Beispiel 12 und 13, sowie 12' und 13', paarweise gegenläufig zueinander drehen. Die Drehrichtungen sind in Fig. 2 durch Pfeile kenntlich gemacht und bei den Arbeitskreiseln 12 und 13 mit den Bezugszahlen 14 (linksdrehend) und 15 (rechtsdrehend) markiert.

Zum Antriebsstrang der Arbeitskreisel 12, 12', 13 und 13' gehören außer der an der Zapfwelle des Traktors 3 angeschlossenen Gelenkwelle 5 noch ein Mittelgetriebe 16 und weitere Winkelgetriebe 17, 17', 18 und 18' oberhalb der Arbeitskreisel 12, 12', 13 und 13', die untereinander durch in den Figuren nicht gezeigte, entlang des Maschinenrahmens 10 verlaufende Gelenkwellen verbunden sind. Der Maschinenrahmen 10 gliedert sich in drei fluchtend aneinander anschließende Abschnitte, die durch zwei Gelenkverbindungen 19 und 19' miteinander verbunden sind.

Fig. 1 zeigt eine Seitenansicht eines erfindungsgemäßen Kreiselheuers 1 in Arbeitsstellung, wobei die Zinkenträger 24 eines Arbeitskreisels 13' mit Doppelfederzinken 20, deren Schenkel 27 etwa tangential aus den Windungen einer schraubenfederförmigen Wicklung 25 austreten, bestückt sind. Dabei ist die Kreiseldrehachse 11 um einen kleinen Winkel $\delta$ in Fahrtrichtung 2 so weit geneigt, dass die Enden 26 der Schenkel 26, 27 der Doppelfederzinken 20 jeweils vor dem Tast- und Stützrad 21 mit geringem Bodenabstand 22 vorbeilaufen, wodurch sie das am Boden 23 liegende Grünfutter erfassen und längs der Umlaufbahn der Zinken 20 mitnehmen, so dass das Grünfutter hinter dem Kreiselheuer 1 etwa um den Winkel $\delta$ gegenüber dem Boden 23 entgegengesetzt der Fahrtrichtung 2 fortgeschleudert wird und sich gleichmäßig auf den Boden niederlegt. Das Fortschleudern des Grünfutters ist in den Figuren 1 und 2 durch mehrere von den dargestellten Arbeitskreiseln 12, 12', 13 und 13' aus schräg nach hinten weisende Pfeile veranschaulicht.

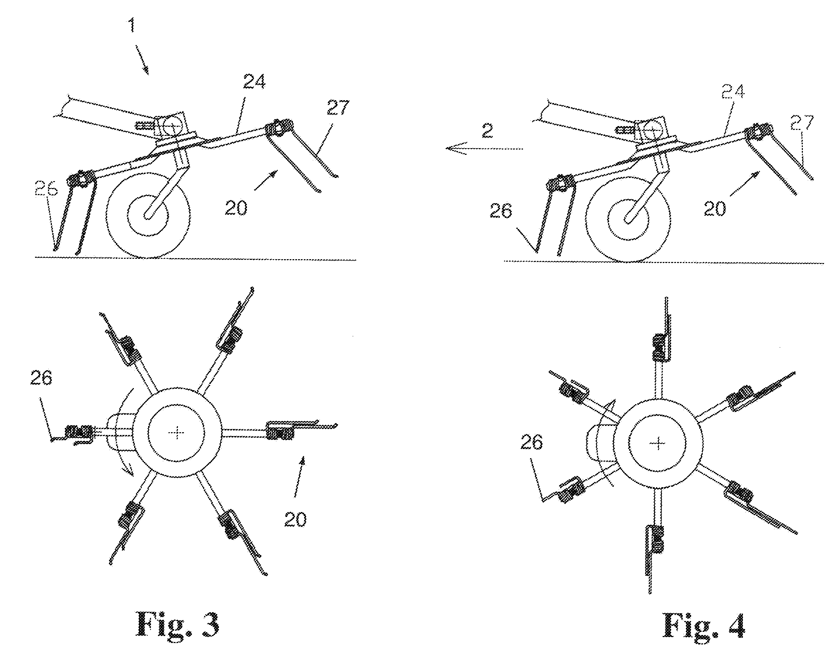

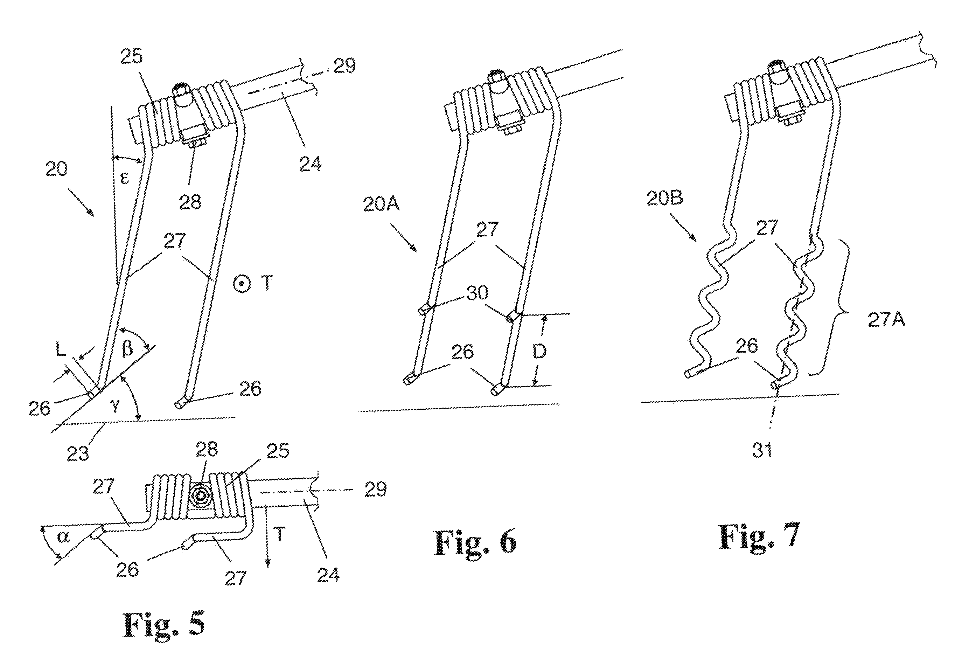

In den Figuren 3 und 4 sind jeweils ein Arbeitskreisel eines erfindungsgemäßen Kreiselheuers 1 (Fig. 3) und eines herkömmlichen Kreiselheuers (Fig. 4) einander in Seitenansicht gegenübergestellt. Wie aus dieser Gegenüberstellung zu ersehen ist, unterscheidet sich der erfindungsgemäße Kreiselheuer 1 von einem herkömmlichen nur durch die Form der Zinken 20, indem die Endabschnitte 26 der Schenkel 26, 27 der Zinken 20 hakenförmig abgewinkelt sind, während diese Endabschnitte 26 bei herkömmlicher Bauart mit den Hauptabschnitten 27 der Zinken 20 fluchten, also keine eigene, vom Hauptabschnitt 27 abweichende Form haben. Die erfindungsgemäße, hakenförmige Gestaltung der Zinkenenden 26 ist in der vergrößerten Ausschnittsdarstellung von Fig. 5 am besten zu erkennen und wird nachfolgend anhand dieser Darstellung näher erläutert.

Fig. 5 zeigt zwei verschiedene Ansichten eines erfindungsgemäßen Zinkens 20, der an einem Ende eines Zinkenträgers 24 mittels einer Schraube 28 montiert ist, am tiefsten Punkt seiner Bewegung entlang des Kreiselumfangs. Die Ansichtsrichtung der oberen Ansicht von Fig. 5, nachfolgend Seitenansicht genannt, ist der Tangentialrichtung der Kreiseldrehung entgegengesetzt, während die Ansichtsrichtung der unteren Ansicht von Fig. 5, nachfolgend Draufsicht genannt, der Richtung der in Fig. 1 gezeigten Kreiseldrehachse 11 entspricht. Die Drehrichtung des Zinkenträgers 24 ist in der Draufsicht durch einen Pfeil T kenntlich gemacht, welcher die Tangentialrichtung der Drehung angibt. In der Seitenansicht zeigt die Tangentialrichtung der Drehung aus der Zeichenebene heraus auf den Betrachter zu und ist durch ein Pfeilspitzensymbol T kenntlich gemacht.

Wie aus der Seitenansicht von Fig. 5 ersichtlich ist, besteht jeder Schenkel 26, 27 des Zinkens 20 aus einem Hauptabschnitt 27 und einem hakenförmig abgewinkelten Endabschnitt 26. Der Hauptabschnitt 27 erstreckt sich vom Ende einer Wicklung 25 aus geradlinig und ist gegenüber der Vertikalen um einen Winkel $\varepsilon$ geneigt, so dass er sich von dem Zinkenträger 24 aus sowohl auf den Boden 23 zu, als auch radial auswärts bezüglich der Kreiseldrehachse 11 (Fig. 1) erstreckt. Wie der Draufsicht von Fig. 5 zu entnehmen ist, verläuft der Hauptabschnitt 27 des Schenkels 26, 27 nicht exakt radial bezüglich der Kreiseldrehachse 11, sondern parallel zu dieser Radialrichtung, da er einen Abstand von der Mittelachse 29 des Zinkenträgers 24 hat. Die Richtung der Mittelachse 29 des Zinkenträgers 24 ist hierbei als radial zur Kreiseldrehachse 11 angenommen.

Aufgrund der Schrägstellung der Kreiseldrehachse 11 um den Winkel δ (Fig. 1) versteht es sich, dass die Winkellage des Zinkens 20 in Bezug auf den Boden 23 sowie die Vertikalrichtung von der momentanen Position des Zinkens 20 entlang des Kreiselumfangs abhängt. Die hier angestellten Winkelbetrachtungen in Bezug auf den Boden 23 und die Vertikalrichtung gelten demnach nur für die Fig. 5 zugrundeliegende tiefste Position des Zinkens 20 entlang seiner Bewegung entlang des Kreiselumfangs.

Der Endabschnitt 26 des Zinkens 20 ist gegenüber dem Hauptabschnitt 27 hakenförmig abgewinkelt, und zwar in zwei verschiedenen Richtungen, nämlich sowohl in der Draufsicht um einen ersten Winkel α nach vorne auf die Tangentialrichtung T der Kreiseldrehung zu, als auch in der Seitenansicht um einen zweiten Winkel β radial nach außen bezüglich der Kreiseldrehachse. Letzteres hat zur Folge, dass sich zwischen dem Endabschnitt 26 und dem Boden 23 in der Seitenansicht ein Winkel γ ergibt, der kleiner ist als der Winkel 90°-ε zwischen dem Hauptabschnitt 27 und dem Boden 23.

Es ist ohne weiteres verständlich, dass die Hakenform der Endabschnitte 26 die Fähigkeit der Zinken 20 zum Ergreifen und Abheben des zu wendenden Futters vom Boden im tiefen Bereich der Bewegungsbahn eines Zinkens 20 verbessert. Andererseits darf die Hakenform aber nicht zu stark ausgeprägt sein, um das Fortschleudern des Futters im entgegengesetzten Bereich der Bewegungsbahn nicht zu behindern. Die erfindungsgemäße Abwinkelung in zwei verschiedenen Richtungen hat sich in dieser Hinsicht als besonders effektiv erwiesen.

Zweckmäßige Wertebereiche für die Winkel α, β und γ, sowie für die Länge L des abgewinkelten Endabschnitts 26 sind in den Ansprüchen angegeben. Hierbei ist der Winkel γ nicht unabhängig von den anderen einstellbar, sondern er ergibt sich aus den Winkeln β und ε nach folgender Formel:

$$\gamma = 90° - (\beta+\varepsilon)$$

Der Winkel ε hängt seinerseits von der Schrägstellung der Mittelachse 29 des Zinkenträgers 24 gegenüber dem Boden 23 und von einer eventuellen Abwinkelung des Hauptteils 27 des Schenkels 26, 27 gegenüber der Wicklung 25 ab, wie sie bei dem hier vorgestellten Ausführungsbeispiel der Fall ist.

Bei dem dargestellten Zinken 20 handelt es sich um einen Doppelzinken mit zwei Schenkeln 26, 27, die von den beiden entgegengesetzten Enden einer schraubenfederförmigen, um das Ende des Zinkenträgers 24 geschlungenen und mit einer Schraube 28 daran befestigten Wicklung 25 abragen. Die Erfindung kann aber auch durch Zinken mit nur einem Schenkel 26, 27 realisiert werden. Bei der in den Figuren gezeigten Ausführung als Doppelzinken haben die Hauptabschnitte 27 der beiden Schenkel 26, 27 eine unterschiedliche Länge, was jedoch bei herkömmlichen Doppelzinken ohne hakenförmig abgewinkelten Endabschnitt 26 bereits bekannt ist.

Eine Variante 20A des erfindungsgemäßen Zinkens 20 ist in Fig. 6 dargestellt. Sie unterscheidet sich von der Grundform nach Fig. 5 dadurch, dass zusätzlich zu den hakenförmig abgewinkelten Endabschnitten 26 entlang des Hauptabschnitts 27 mindestens ein ebenfalls hakenförmiger Fortsatz 30 vorgesehen ist, welcher parallel zu dem hakenförmig abgewinkelten Endabschnitt 26 verläuft und die gleiche Länge wie dieser hat. Dabei liegt der Abstand D eines Fortsatzes 30 vom Endabschnitt 26 desselben Schenkels 26, 27 bzw. in Fall mehrerer solcher Fortsätze auch deren gegenseitiger Abstand im Bereich von ca. 50 bis 100 mm.

Eine weitere Variante 20B des erfindungsgemäßen Zinkens 20 zeigt Fig. 7. Sie unterscheidet sich von der Grundform nach Fig. 5 dadurch, dass zusätzlich zum Vorhandensein eines hakenförmig abgewinkelten Endabschnitts 26 zumindest ein unterer Teil 27A des Hauptabschnitts 27 des Schenkels 26, 27, welcher an seinem Ende in den hakenförmigen Endabschnitt 26 übergeht, wellen- oder schraubenfederförmig ausgebildet ist. Dabei ist die Richtung des Hauptabschnitts 27, auf die sich die zuvor erläuterten Winkel α und β der Abwinkelung des Endabschnitts 26 beziehen, durch die mittlere Richtung 31 des Wellen- oder schraubenfederförmigen Abschnitts 27A gegeben. Mit der Richtung ist hierbei die Längsrichtung gemeint.

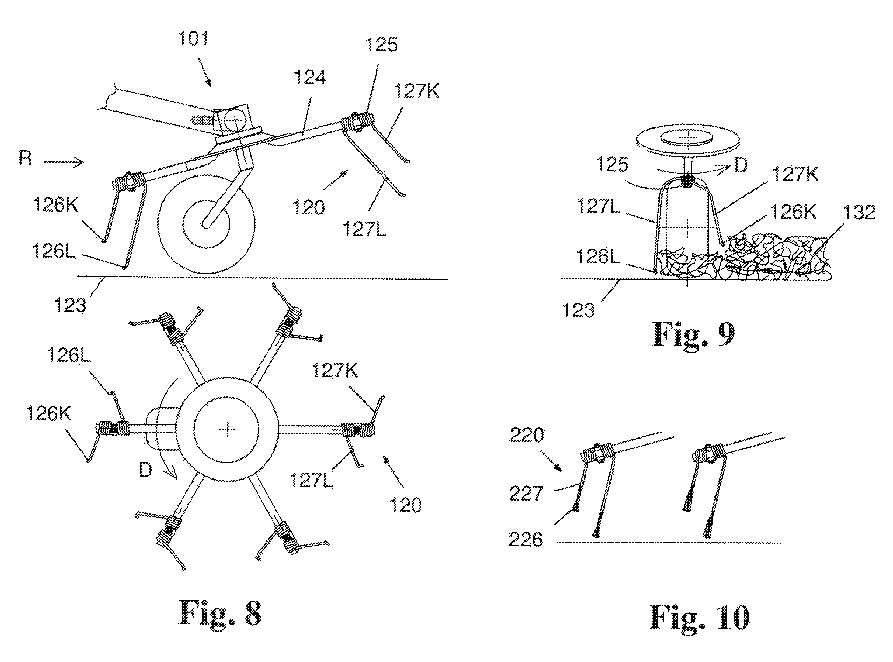

Eine zweite Ausführungsform eines Arbeitskreisels eines erfindungsgemäßen Kreiselheuers 101 in zwei Ansichten, welche genau denjenigen von Fig. 3 entsprechen, zeigt Fig. 8. Wie ein Vergleich anhand dieser Figuren erweist, unterscheidet sich die zweite Ausführungsform von der ersten zunächst dadurch, dass die jeweils paarweise am Ende eines Zinkenträgers 124 angeordneten Zinken 120 nicht alle gleich lang sind, sondern dass jedes Zinkenpaar einen Schenkel 126K, 127K mit einem kürzeren Hauptabschnitt 127K und einen Schenkel 126L, 127L mit einem längeren Hauptabschnitt 127L aufweist. Ein Richtwert für die Größe des Längenunterschiedes ist ein Bereich von 2cm bis 10cm. Die jeweiligen Endabschnitte 126K und 126L haben die gleiche abgewinkelte Form wie bei der ersten Ausführungsform und unterscheiden sich auch voneinander nicht.

Ein weiterer Unterschied zur ersten Ausführungsform besteht darin, dass die beiden Schenkel 126K, 127K und 126L, 127L eines Zinkenpaares in der in Fig. 8 oben durch einen Pfeil R gekennzeichneten Richtung gesehen einen deutlichen Abstand voneinander aufweisen. Dabei ist die Pfeilrichtung R die Projektion der Radialrichtung des Arbeitskreisels, welche gleichzeitig der Längsrichtung eines Zinkenträgers 124 sowie der Längsrichtung der Wicklung 125 eines Zinkens 120 entspricht, in eine parallel zum Boden 123 liegende Ebene. Besagter Abstand und sein Zweck sind in Fig. 9 verdeutlicht, deren Ansichtsrichtung die in Fig. 8 durch den Pfeil R gekennzeichnete Richtung ist. Das in Fig. 9 sichtbare Zinkenpaar ist dasjenige, welches sich in Fig. 8 gerade am weitesten links und somit am tiefsten Punkt seiner Bewegungsbahn, die sich aus der in den Figuren 8 und 9 jeweils mit einem Pfeil D gekennzeichneten Drehbewegung des Arbeitskreisels um die Kreiselachse ergibt, befindet.

Wie Fig. 9 erkennen lässt, sind die unterschiedlichen Längen der Hauptabschnitte 127K und 127L der beiden Schenkel 126K, 127K und 126L, 127L eines Zinkenpaares so bemessen, dass der kürzere Schenkel 126K, 127K am tiefsten Punkt seiner Bewegungsbahn noch einen signifikanten Abstand vom Boden 123 hat, während der längere Schenkel 126L, 127L am tiefsten Punkt seiner Bewegungsbahn nahezu den Boden erreicht. Ferner haben die hakenförmigen Endabschnitte 126K und 126L der beiden Schenkel 126K, 127K und 126L, 127L in der Umfangsrichtung des Arbeitskreisels einen Abstand voneinander, wobei der Schenkel 126K, 127K mit dem kürzeren Hauptabschnitt 127K dem Schenkel 126L, 127L mit dem längeren Hauptabschnitt 127L in der Arbeitsbewegung vorauseilt. Ein Richtwert für die Größe des Abstandes ist ein Bereich von 10cm bis 30cm.

Hierdurch wird erreicht, dass der Schenkel 126K, 127K mit dem kürzeren Hauptabschnitt 127K nur einen oberen Teil des auf dem Boden 123 vorhandenen Futters 132 aufnimmt, während der Schenkel 126L, 127L mit dem längeren Hauptabschnitt 127L den verbleibenden unteren Teil des Futters 132 aufnimmt. Es ergibt sich also aus der unterschiedlichen Länge der Hauptabschnitte 127K und 127L und aus dem Abstand der Endabschnitte 126K und 126L in der Richtung der Arbeitsbewegung eine zweistufige Wirkung bei der Futteraufnahme. Dies sorgt für eine sehr gleichmäßige Futterausbreitung, indem sich das Futter beider Schichten beim Auswurf in der Luft vermischt. Die beiden unterschiedlich langen Zinkenschenkel 126K, 127K und 126L, 127L teilen sich die Streuarbeit gewissermaßen auf und bewirken dadurch eine intensivere Futterverteilung. Im Zusammenspiel der zahlreichen Zinkenschenkel der Kreisel eines Rotorzettwenders 101 ergibt sich insgesamt eine sehr gute Streuarbeit und daraus resultierend ein optimaler Zugang von Wind und Sonne an das zum Trocknen ausgestreute Grünfutter.

Es versteht sich, dass auch die vorausgehend anhand der Figuren 6 und 7 vorgestellten Varianten 20A und 20B eines erfindungsgemäßen Doppelzinkens 20 mit der anhand der Figuren 8 und 9 vorgestellten Zinkenvariante 120 kombiniert werden können. In einem solchen Fall entspricht die Formgebung der Zinkenschenkel einer der Varianten 20A oder 20B und die beiden Schenkel jedes Zinkenpaares haben unterschiedliche Längen und einen gegenseitigen Abstand, wie es die Variante 120 vorsieht.

Eine weitere Variante 220 eines erfindungsgemäßen Zinkens zeigt Fig. 10. Sie unterscheidet sich von der Grundform 20 nach Fig. 5 zunächst dadurch, dass die Endabschnitte 226 der Schenkel 226, 227 gegenüber den Hauptabschnitten 227 eine Querschnittsvergrößerung aufweisen. Beispielsweise kann diese Querschnittsvergrößerung die Form eines sich nach unten hin aufweitenden Kegels haben, wie es in Fig. 10 angedeutet ist. Dieser Kegel geht aus dem Haken der Grundform 20 durch eine Rotation des Hakens um die Längsachse des Hauptabschnitts 27 hervor, kann also insofern als eine spezielle Form eines Hakens aufgefasst werden.

Darüber hinaus ist bei der in Fig. 10 gezeigten Zinkenvariante 220 auch die unterschiedliche Schenkellänge, wie sie die Variante 120 vorsieht, verwirklicht. Grundsätzlich könnte aber eine Querschnittsvergrößerung anstelle eines Hakens auch bei Zinken 20 mit gleichlangen Schenkeln angewendet werden. Die genaue Formgebung einer Querschnittsvergrößerung ist eine Optimierungsfrage. Beispielhaft ist in Fig. 10 rechts noch eine Variante mit kegelförmigen Endabschnitten der Zinkenschenkel dargestellt, bei welcher der Öffnungswinkel der Kegel bei gleichem Endquerschnitt kleiner ist als bei dem in Fig. 10 links dargestellten Zinken 220, so dass die Kegel jeweils einen längeren Teil des Zinkens umfassen. Selbstverständlich ist auch eine andere Art der Querschnittsvergrößerung als eine kegelförmige denkbar.

Eine Verbesserung der Streuqualität, wie sie mit der Erfindung beabsichtigt ist, kann mit sämtlichen hier vorgestellten Varianten der Zinkenform erzielt werden. Dabei ist es nicht unbedingt erforderlich, dass sämtliche Zinkenträger eines Arbeitskreisels mit solchen erfindungsgemäßen Zinken bestückt werden. Vielmehr ist es beispielsweise auch möglich, nur abwechselnd jeden zweiten Zinkenträger mit solchen Zinken und jeden zweiten Zinkenträger mit herkömmlichen Zinken, wie sie in Fig. 4 gezeigt sind, zu bestücken.

Bezugszeichenliste

| 1, 100 | Kreiselheuer |
|---|---|
| 2 | Fahrtrichtung |
| 3 | Traktor |
| 4 | Tragkonstruktion |

| 5 | Gelenkwelle |
|---|---|
| 10 | Maschinenrahmen |
| 11 | Kreiseldrehachse |
| 12,12',13,13' | Arbeitskreisel |
| 14 | Drehrichtung linksdrehend |
| 15 | Drehrichtung rechtsdrehend |
| 16 | Mittelgetriebe |
| 17,17',18, 18' | Winkelgetriebe oberhalb des Kreisels |
| 19,19' | Gelenkverbindungen |
| 20,120,220 | Zinken |
| 21 | Tast- und Stützrad |
| 22 | Bodenabstand |
| 23,123 | Boden |
| 24,124 | Zinkenträger |
| 25,125 | Wicklung |
| 26,126,226 | Schenkel-Endabschnitt |
| 27,127,227 | Schenkel-Hauptabschnitt |
| 27A | Unterer Schenkelteil des Hauptabschnitts |
| 28 | Befestigungsschraube |
| 29 | Zinkenträger-Mittelachse |
| 30 | Fortsatz |
| 31 | Mittlere Richtung des unteren Schenkelteils |
| 132 | Futter |
| $\alpha$ | Erster Winkel zwischen Schenkelend- und -hauptabschnitt |
| $\beta$ | Zweiter Winkel zwischen Schenkelend- und -hauptabschnitt |
| $\gamma$ | Winkel zwischen Schenkelendabschnitt und Boden |
| $\delta$ | Neigungswinkel der Kreiselachse (Futterschleuderwinkel zum Boden) |
| $\epsilon$ | Winkel zwischen Schenkelhauptabschnitt und Vertikalrichtung |
| T | Tangentialrichtung der Kreiseldrehung |
| R | Kreisel-Radialrichtung |
| D | Kreisel-Drehrichtung |

**Patentansprüche**

1. Heuwerbungsmaschine, insbesondere Kreiselzettwender, mit mindestens einem Arbeitskreisel, der in seiner Arbeitsstellung um eine überwiegend vertikale und gegenüber der Vertikalrichtung um einen vorbestimmten Winkel geneigte Achse drehbar ist und entlang seines Umfangs mit einer Vielzahl von Zinken bestückt ist, deren Schenkel jeweils einen Hauptabschnitt aufweisen, der in der Arbeitsstellung der Maschine dergestalt schräg zum Boden gerichtet ist, dass er sich zugleich annähernd radial auswärts bezüglich der Kreiseldrehachse erstreckt, **dadurch gekennzeichnet, dass** ein unterer Endabschnitt (26; 126K; 126L) des Schenkels (26, 27; 126K, 127K; 126L, 127L) gegenüber dem Hauptabschnitt (27; 127K; 127L) dergestalt hakenförmig abgewinkelt ist, dass er in der Arbeitsstellung sowohl bezüglich der Tangentialrichtung (T) der Kreiseldrehung nach vorne oder zumindest schräg nach vorne gerichtet ist, als auch radial auswärts bezüglich der Kreiseldrehachse (11) unter einem kleineren Winkel zum Boden (23; 123) als der Hauptabschnitt (27; 127K; 127L) verläuft.

2. Heuwerbungsmaschine nach Anspruch 1, **dadurch gekennzeichnet, dass** in der Arbeitsstellung der Hauptabschnitt (27; 127K; 127L) eines Schenkels (26, 27; 126K, 127K; 126L, 127L) in einer ersten, der Richtung der Kreiseldrehachse (11) entsprechenden Ansichtsrichtung zumindest annähernd parallel zur Radialrichtung bezüglich der Kreiseldrehachse (11) und in einer zweiten, der Tangentialrichtung (T) der Kreiseldrehung entgegengerichteten Ansichtsrichtung schräg zum Boden (23; 123) und radial auswärts bezüglich der Kreiseldrehachse (11) verläuft, und dass der abgewinkelte untere Endabschnitt (26; 126K; 126L) in der ersten Ansichtsrichtung gegenüber dem Hauptabschnitt (27; 127K; 127L) um einen ersten Winkel $\alpha$ nach vorne auf die Tangentialrichtung (T) der Kreiseldrehung zu und in der zweiten Ansichtsrichtung gegenüber dem Hauptabschnitt (27; 127K; 127L) um einen zweiten Winkel $\beta$ radial nach außen bezüglich der Kreiseldrehachse (11) geneigt ist.

3. Heuwerbungsmaschine nach Anspruch 2, **dadurch gekennzeichnet, dass** der erste Winkel $\alpha$ zwischen 10° und 60° beträgt.

4. Heuwerbungsmaschine nach Anspruch 2 oder 3, **dadurch gekennzeichnet, dass** der zweite Winkel β zwischen 10° und 80° beträgt.

5. Heuwerbungsmaschine nach einem der Ansprüche 2 bis 4, **dadurch gekennzeichnet, dass** in der zweiten Ansichtsrichtung ein dritter Winkel γ zwischen dem abgewinkelten unteren Endabschnitt (26; 126K; 126L) und dem Boden (23; 123) in der tiefsten Position des Zinkens (20; 120) entlang des Kreiselumfangs zwischen 0° und 60° beträgt.

6. Heuwerbungsmaschine nach einem der Ansprüche 1 bis 5, **dadurch gekennzeichnet, dass** die Länge L des hakenförmig abgewinkelten Endabschnitts (26; 126K; 126L) zwischen 10 und 50 mm beträgt.

7. Heuwerbungsmaschine nach einem der Ansprüche 1 bis 6, **dadurch gekennzeichnet, dass** die Zinken (20; 120) als Doppelzinken mit jeweils zwei durch eine Wicklung (25; 125) einstückig miteinander verbundenen Schenkeln ausgebildet sind, und dass nur einer der zwei Schenkel einen hakenförmig abgewinkelten Endabschnitt (26; 126K; 126L) aufweist.

8. Heuwerbungsmaschine nach einem der Ansprüche 1 bis 6, **dadurch gekennzeichnet, dass** die Zinken (20; 120) als Doppelzinken mit jeweils zwei durch eine Wicklung (25; 125) einstückig miteinander verbundenen Schenkeln (26, 27) ausgebildet sind, und dass beide Schenkel (26, 27) jeweils einen hakenförmig abgewinkelten Endabschnitt (26) aufweisen.

9. Heuwerbungsmaschine nach einem der Ansprüche 1 bis 8, **dadurch gekennzeichnet, dass** ein Schenkel (26, 27; 126K, 127K; 126L, 127L) eines Zinkens (20; 120) zusätzlich zu dem hakenförmig abgewinkelten Endabschnitt (26; 126K; 126L) entlang seines Hauptabschnitts (27; 127K; 127L) mindestens einen hakenförmig abragenden Fortsatz (30) aufweist, der parallel zu dem hakenförmig abgewinkelten Endabschnitt (26; 126K; 126L) verläuft und die gleiche Länge L wie dieser hat.

10. Heuwerbungsmaschine nach einem der Ansprüche 1 bis 9, **dadurch gekennzeichnet, dass** ein Schenkel (26, 27) eines Zinkens (20) entlang zumindest eines unteren Teils (27A) seines Hauptabschnitts (27), welcher an seinem Ende in den hakenförmigen Endabschnitt (26) übergeht, wellen- oder schraubenfederförmig ausgebildet ist, wobei in diesem Fall die Richtung des Hauptabschnitts (27) als Bezug für die Abwinkelung des Endabschnitts (26) durch die mittlere Richtung (31) des wellen- oder schraubenfederförmigen Abschnitts (27A) gegeben ist.

11. Heuwerbungsmaschine nach einem der Ansprüche 1 bis 10, **dadurch gekennzeichnet, dass** die Zinken (120) als Doppelzinken mit jeweils zwei durch eine Wicklung (125) einstückig miteinander verbundenen Schenkeln (126K, 127K; 126L, 127L) ausgebildet sind, und dass die beiden Schenkel (126K, 127K; 126L, 127L) unterschiedlich lang sind.

12. Heuwerbungsmaschine nach Anspruch 11, **dadurch gekennzeichnet, dass** die unteren Endabschnitte (126K; 126L) der beiden unterschiedlich langen Schenkel (26, 27; 126K, 127K; 126L, 127L) eines Doppelzinkens (120) in einer Ansichtsrichtung (R), welche eine Projektion der Radialrichtung des Arbeitskreisels (12, 12', 13, 13') in eine parallel zum Boden (123) liegende Ebene ist, einen vorbestimmten Abstand voneinander haben und so angeordnet sind, dass der untere Endabschnitt (126K) des kürzeren Schenkels (126K, 127K) im Betrieb des Arbeitskreisels (12, 12', 13, 13') dem unteren Endabschnitt (126L) des längeren Schenkels (126L, 127L) voreilt.

13. Heuwerbungsmaschine nach einem der Ansprüche 1 bis 12, **dadurch gekennzeichnet, dass** die hakenförmige Abwinkelung des unteren Endabschnittes (227) eines Schenkels (226, 227) durch eine Vergrößerung des Querschnitts gebildet wird.

14. Zinken für einen Arbeitskreisel einer Heuwerbungsmaschine, insbesondere eines Kreiselzettwenders, mit einer zur Befestigung an einem Zinkenträger geeigneten, schraubenfederförmigen Wicklung und mindestens einem einstückig mit der Wicklung ausgebildeten und von einem Ende derselben abragenden Schenkel, **dadurch gekennzeichnet, dass** der Schenkel (26, 27) einen Hauptabschnitt (27) und einen hakenförmig abgewinkelten Endabschnitt (26) aufweist, wobei der Endabschnitt (26) in zwei zueinander und zur Längsachse der Wicklung (25) senkrechten Ansichtsrichtungen, von denen die erste diejenige ist, in welcher die sichtbare Länge des Schenkels (26, 27) am geringsten ist, und die zweite diejenige ist, in welcher die sichtbare Länge des Schenkels (26, 27) am größten ist, gegenüber dem Hauptabschnitt (27) um einen ersten Winkel α bzw. einen zweiten Winkel β geneigt ist.

**15.** Zinken nach Anspruch 14, **dadurch gekennzeichnet, dass** der erste Winkel $\alpha$ zwischen 10° und 60° beträgt.

**16.** Zinken nach Anspruch 14 oder 15 , **dadurch gekennzeichnet, dass** der zweite Winkel $\beta$ zwischen 10° und 80° beträgt.

**17.** Zinken nach einem der Ansprüche 14 bis 16, **dadurch gekennzeichnet, dass** die Länge L des hakenförmig abgewinkelten Endabschnitts (26) zwischen 10 und 50 mm beträgt.

**18.** Zinken nach einem der Ansprüche 14 bis17, **dadurch gekennzeichnet, dass** die Zinken (20) als Doppelzinken mit jeweils zwei durch eine Wicklung (25) einstückig miteinander verbundenen Schenkeln ausgebildet sind, und dass nur einer der zwei Schenkel einen hakenförmig abgewinkelten Endabschnitt (26) aufweist.

**19.** Zinken nach einem der Ansprüche 14 bis 17, **dadurch gekennzeichnet, dass** die Zinken als Doppelzinken mit jeweils zwei durch eine Wicklung einstückig miteinander verbundenen Schenkeln (26, 27) ausgebildet sind, und dass beide Schenkel (26, 27) jeweils einen hakenförmig abgewinkelten Endabschnitt (26) aufweisen.

**20.** Zinken nach einem der Ansprüche 14 bis 19, **dadurch gekennzeichnet, dass** ein Schenkel (26, 27) zusätzlich zu dem hakenförmig abgewinkelten Endabschnitt (26) entlang seines Hauptabschnitts (27) mindestens einen hakenförmig abragenden Fortsatz (30) aufweist, der parallel zu dem hakenförmig abgewinkelten Endabschnitt (26) verläuft und die gleiche Länge L wie dieser hat.

**21.** Zinken nach einem der Ansprüche 14 bis 20, **dadurch gekennzeichnet, dass** ein Schenkel (26, 27) entlang zumindest eines unteren Teils (27A) seines Hauptabschnitts (27), welcher an seinem Ende in den hakenförmigen Endabschnitt (26) übergeht, wellen- oder schraubenfederförmig ausgebildet ist, wobei die Richtung des Hauptabschnitts (27) als Bezug für die Abwinkelung des Endabschnitts (26) durch die mittlere Richtung (31) des wellen- oder schraubenfederförmigen Abschnitts (27A) gegeben ist.

**22.** Zinken nach einem der Ansprüche 14 bis 21, **dadurch gekennzeichnet, dass** die Zinken (120) als Doppelzinken mit jeweils zwei durch eine Wicklung (125) einstückig miteinander verbundenen Schenkeln (126K, 127K; 126L, 127L) ausgebildet sind, und dass die beiden Schenkel (126K, 127K; 126L, 127L) unterschiedlich lang sind.

**23.** Zinken nach Anspruch 22, **dadurch gekennzeichnet, dass** die Endabschnitte (126K; 126L) der beiden unterschiedlich langen Schenkel (126K, 127K; 126L, 127L) eines Doppelzinkens (120) in einer der Achse der Wicklung (125) entsprechenden Ansichtsrichtung einen vorbestimmten Abstand voneinander haben.

**24.** Zinken nach einem der Ansprüche 14 bis 23, **dadurch gekennzeichnet, dass** die hakenförmige Abwinkelung des Endabschnittes (226) eines Schenkels (226, 227) durch eine Vergrößerung des Querschnitts gebildet wird.

Fig. 1

Fig. 2

Fig. 3

Fig. 4

EP 1 967 060 A1

Fig. 7

Fig. 6

Fig. 5

Fig. 9

Fig. 10

Fig. 8

**Europäisches Patentamt**

**EUROPÄISCHER RECHERCHENBERICHT**

Nummer der Anmeldung

EP 07 11 9168

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| P,X | EP 1 800 533 A (MARTIN ZIEGLER GMBH & CO KG [DE]) 27. Juni 2007 (2007-06-27)<br><br>* Spalte 8, Zeilen 12-50; Abbildung 7 *<br>----- | 1,7,11, 12, 14-16, 18,22,23 | INV.<br>A01D78/10<br>A01D80/02 |
| A | DE 201 07 541 U1 (NIEMEYER LANDMASCH GMBH [DE]) 19. September 2002 (2002-09-19)<br>* Seite 1, Zeilen 20-29 *<br>* Seite 3, Zeile 5 - Seite 5, Zeile 18; Abbildungen *<br>----- | 1-24 | |
| A | DE 31 23 020 A1 (POETTINGER OHG ALOIS [AT]) 5. Januar 1983 (1983-01-05)<br>* Seite 10, Absatz 3 - Seite 14, Absatz 6; Abbildungen *<br>----- | 1-24 | |
| A | DE 299 12 957 U1 (MAASLAND NV [NL]) 16. September 1999 (1999-09-16)<br>* Seite 2, Zeile 14 - Seite 4, Zeile 17; Abbildungen 1,2 *<br>----- | 1-24 | RECHERCHIERTE SACHGEBIETE (IPC) |
| A | DE 93 04 534 U1 (LEDERLE, HANS, 8951 EGGENTHAL, DE; SIMON, FRANZ, 8949 UNTEREGG, DE) 19. Mai 1993 (1993-05-19)<br>* Seite 4, Absatz 3; Abbildung 4 *<br>----- | 9,20 | A01D |

Der vorliegende Recherchenbericht wurde für alle Patentansprüche erstellt

| Recherchenort | Abschlußdatum der Recherche | Prüfer |
|---|---|---|
| München | 19. Juni 2008 | Schlichting, N |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
................................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT**
**ÜBER DIE EUROPÄISCHE PATENTANMELDUNG NR.**                    EP 07 11 9168

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

19-06-2008

| Im Recherchenbericht angeführtes Patentdokument | Datum der Veröffentlichung | Mitglied(er) der Patentfamilie | Datum der Veröffentlichung |
|---|---|---|---|
| EP 1800533 A | 27-06-2007 | DE 102005061510 A1 | 05-07-2007 |
| DE 20107541 U1 | 19-09-2002 | KEINE | |
| DE 3123020 A1 | 05-01-1983 | FR 2507431 A1<br>NL 8202352 A | 17-12-1982<br>03-01-1983 |
| DE 29912957 U1 | 16-09-1999 | AT 254391 T<br>EP 1115275 A1<br>JP 2003505048 T<br>WO 0106836 A1<br>US 2002157371 A1 | 15-12-2003<br>18-07-2001<br>12-02-2003<br>01-02-2001<br>31-10-2002 |
| DE 9304534 U1 | 19-05-1993 | KEINE | |

Für nähere Einzelheiten zu diesem Anhang : siehe Amtsblatt des Europäischen Patentamts, Nr.12/82

EPO FORM P0461

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19859922 A1